(19) Europäisches Patentamt
European Patent Office
Office européen des brevets

(11) **EP 4 026 862 B1**

(12) **EUROPEAN PATENT SPECIFICATION**

(45) Date of publication and mention
of the grant of the patent:
**16.08.2023   Bulletin 2023/33**

(21) Application number: **21856953.1**

(22) Date of filing: **31.05.2021**

(51) International Patent Classification (IPC):
**C08F 299/08** (2006.01)    **C08K 5/14** (2006.01)
**C08K 9/06** (2006.01)    **C08L 83/07** (2006.01)
**C08J 5/18** (2006.01)    **C08G 77/12** (2006.01)

(52) Cooperative Patent Classification (CPC):
(C-Sets available)
**C09K 5/14; C08F 299/08; C08G 77/12; C08J 5/18;
C08K 9/06; C08L 83/04;** C08J 2383/04; C08K 3/14;
C08K 3/36; C08K 2003/2227; C08K 2003/2296;
C08K 2003/282; C08K 2003/385; C08K 2201/005;
C08K 2201/006;                          (Cont.)

(86) International application number:
**PCT/JP2021/020673**

(87) International publication number:
**WO 2022/102148 (19.05.2022 Gazette 2022/20)**

(54) **THERMALLY CONDUCTIVE SILICONE COMPOSITION, SHEET USING SAME, AND PRODUCTION METHOD THEREFOR**

WÄRMELEITENDE SILIKONZUSAMMENSETZUNG, DARAUS HERGESTELLTE FOLIE UND HERSTELLUNGSVERFAHREN DAFÜR

COMPOSITION DE SILICONE THERMOCONDUCTRICE, FEUILLE L'UTILISANT ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **16.11.2020   JP 2020190489**

(43) Date of publication of application:
**13.07.2022   Bulletin 2022/28**

(73) Proprietors:
• **Fuji Polymer Industries Co., Ltd.
Nagoya-shi, Aichi 450-0002 (JP)**
• **Sulfur Chemical Laboratory Inc.
Morioka-shi, Iwate 020-0066 (JP)**

(72) Inventors:
• **OKUMURA, Tomoyuki
Nagoya-shi, Aichi 463-0026, (JP)**
• **KAWAHAMA, Keisuke
Nagoya-shi, Aichi 463-0026, (JP)**
• **MORI, Kunio
Morioka-shi, Iwate 020-0066, (JP)**

(74) Representative: **Diehl & Partner
Patent- und Rechtsanwaltskanzlei mbB
Erika-Mann-Straße 9
80636 München (DE)**

(56) References cited:
**WO-A1-2019/098290     WO-A1-2020/133374
WO-A1-2020/153505     JP-A- 2010 006 923
JP-A- 2010 006 923**

EP 4 026 862 B1

(52) Cooperative Patent Classification (CPC): (Cont.)
C08K 2201/014

C-Sets
**C08K 9/06, C08L 83/04;**
**C08L 83/04, C08L 83/00, C08K 3/22, C08K 3/22,**
**C08K 3/22, C08K 5/14, C08K 9/06, C08K 9/06**

**Description**

Technical Field

The present invention relates to a thermally conductive silicone composition and a thermally conductive silicone sheet that are suitable to be interposed between a heat generating member and a heat dissipating material of electrical and electronic components or the like, and a method for producing the thermally conductive silicone sheet.

Background Art

With the significant improvement in performance of semiconductors such as CPUs in recent years, the amount of heat generated by them has become extremely large. For this reason, heat dissipating materials are attached to electronic components such as semiconductors that may generate heat, and a thermally conductive silicone sheet is used to improve the adhesion between the heat dissipating materials and the semiconductors. Conventional transistors and capacitors (for power supply etc.) have been used with heat dissipating caps and sheets that are of addition reaction curable millable type. Such heat dissipating members are also required to have higher thermal conductive properties due to a recent increase in the amount of heat generated. Patent Documents 1 to 3 propose a thermally conductive silicone sheet that is used in combination with a reinforcement material such as glass cloth to improve ease of handling.
WO2020133374 discloses thermally conductive silicone compositions comprising three different groups of filler particles having different size distributions. The filler particles may be treated with filler treating agents based on silanes with alkyl and alkenyl side groups.

Prior Art Documents

Patent Documents

  Patent Document 1: JPWO 2018-061447 A1
  Patent Document 2: JPWO 2018-020862 A1
  Patent Document 3: JP 2017-222884 A

Disclosure of Invention

Problem to be Solved by the Invention

However, the conventional thermally conductive silicone sheet combined with the reinforcement material such as glass cloth has a large thermal resistance. This has posed a major problem in the development ofhigh thermally conductive products.
To solve these conventional problems, the present invention provides a sheet of a thermally conductive silicone composition that has a high strength and can be handled satisfactorily without the use of a reinforcement sheet such as glass cloth, and a method for producing the sheet of the thermally conductive silicone composition.

Means for Solving Problem

A thermally conductive silicone composition of the present invention contains the following components A to C:

  A a linear terminal-reactive polydimethylsiloxane;
  B. a thermally conductive filler inducting the following B-1, B-2, and B-3 in an amount of 800 to 2500 parts by mass with respect to 100 parts by mass of the component A and
  C. a curing catalyst in a catalytic amount.

  B-1 is a thermally conductive filler that has an average particle size of 0.1 $\mu$m or more and less than 1.0 $\mu$m and is surface treated with a surface treatment agent containing a reactive group having no unsaturated bond
  B-2 is a thermally conductive filler that has an average particle size of 1.0 $\mu$m or more and less than 10 $\mu$m and is surface treated with a surface treatment agent containing a reactive group having an unsaturated bond
  B-3 is a thermally conductive filler that has an average particle size of 10 $\mu$m or more and 100 $\mu$m or less and is surface treated with at least one selected from the surface treatment agent containing a reactive group having no unsaturated bond and the surface treatment agent containing a reactive group having an unsaturated bond

A thermally conductive silicone sheet of the present invention includes the thermally conductive silicone composition described above. The thermally conductive silicone composition is molded into a sheet and the sheet is thermally cured. A tensile strength of the thermally conductive silicone sheet is 5 MPa or more.

A method for producing a thermally conductive silicone sheet of the present invention includes uniformly mixing the composition containing the components A to C, molding the composition into a sheet, and thermally curing the sheet.

Effects of the Invention

The thermally conductive silicone composition of the present invention contains the components A to C, and thus can have a high strength and be handled satisfactorily without the use of a reinforcement sheet such as glass cloth when the composition is formed into a sheet. The thermally conductive silicone sheet of the present invention is configured such that the thermally conductive silicone composition is molded into a sheet and the sheet is thermally cured. With this configuration, the thermally conductive silicone sheet can have a tensile strength of 5 MPa or more and a thermal conductivity of 1 Whn-K or more. The production method of the present invention can efficiently and reasonably produce the thermally conductive silicone sheet even at a low cost.

Brief Description of Drawings

[FIG. 1] FIGS. 1A to 1B are diagrams illustrating a method for measuring a thermal conductivity of a sample in an example of the present invention.

[FIG. 2] FIG. 2 is a schematic diagram illustrating a spherical particle of a thermally conductive filler.

Description of the Invention

A thermally conductive silicone composition of the present invention contains the following components A to C:

A a linear terminal-reactive polydimethylsiloxane in an amount of 100 parts by mass;
B. a thermally conductive filler including the following B-1, B-2, and B-3 in an amount of 800 to 2500 parts by mass; and
C. a curing catalyst in a catalytic amount.

B-1 is a thermally conductive filler that has an average particle size of 0.1 $\mu$m or more and less than 1.0 $\mu$m and is surface treated with a surface treatment agent containing a reactive group having no unsaturated bond
B-2 is a thermally conductive filler that has an average particle size of 1.0 $\mu$m or more and less than 10 $\mu$m and is surface treated with a surface treatment agent containing a reactive group having an unsaturated bond.
B-3 is a thermally conductive filler that has an average particle size of 10 $\mu$m or more and 100 $\mu$m or less and is surface treated with at least one selected from the surface treatment agent containing a reactive group having no unsaturated bond and the surface treatment agent containing a reactive group having an unsaturated bond.

The component A is preferably a linear organopolysiloxane that has a reactive group at each end of the molecular chain and organic groups such as alkyl group and phenyl group, or a combination of these groups, on side chains. The linear organopolysiloxane may include a small amount of branched structure (trifunctional siloxane units) in the molecule. An example of the component A may be a compound in which the main chain is dimethylpolysiloxane and at least both ends are terminated by dimethylvinylsiloxy groups. When the component A is a linear organopolysiloxane having a vinyl group at each end of the molecular chain, the thermally conductive silicone composition can exhibit flexibility, and also the molecular chain remains linear after curing.

Specific examples of the component A include the following: dimethylpolysiloxane with both ends of the molecular chain terminated by dimethylvinylsiloxy groups; dimethylpolysiloxane with both ends of the molecular chain terminated by methylphenylvinylsiloxy groups; a copolymer of dimethylsiloxane with both ends of the molecular chain terminated by dimethylvinylsiloxy groups and methylphenylsiloxane with both ends of the molecular chain terminated by dimethylvinylsiloxy groups; a copolymer of dimethylsiloxane with both ends of the molecular chain terminated by dimethylvinylsiloxy groups and methylvinylsiloxane with both ends of the molecular chain terminated by dimethylvinylsiloxy groups, a copolymer of dimethylsiloxane with both ends of the molecular chain terminated by trimethylsiloxy groups and methylvinylsiloxane with both ends of the molecular chain terminated by trimethylsiloxy groups; methyl(3,3,3-trifluoropropyl)polysiloxane with both ends of the molecular chain terminated by dimethylvinylsiloxy groups, a copolymer of dimethylsiloxane with both ends of the molecular chain terminated by silanol groups and methylvinylsiloxane with both ends of the molecular chain terminated by silanol groups, and a copolymer of dimethylsiloxane with both ends of the molecular chain terminated by silanol groups, methylvinylsiloxane with both ends of the molecular chain terminated by silanol groups, and methylphenylsiloxane with both ends of the molecular chain terminated by silanol groups. These polymers may be used alone or in combinations of two or more. In particular, a linear terminal-reactive polydimethylsiloxane represented by the following general formula (1) is preferred

$$X-[Si(CH_3)_2-O-]_nSi(CH_3)_2-Y \qquad (1)$$

(where the degree of polymerization n is in the range of 5 to 2100 and the end groups X, Y are vinyl groups)

The thermally conductive filler used in the present invention is preferably composed of inorganic powder of, e.g., alumina (aluminum oxide), zinc oxide, silicon oxide, silicon carbide, aluminum nitride, or boron nitride. Alumina is preferred among them because it is inexpensive. The thermally conductive filler may be in any form, including spherical, irregular, needle-like, and platelike. In particular, a spherical shape is preferred The thermally conductive filler may be used alone or in combinations of two or more. The amount of the thermally conductive filler is 800 to 2500 parts by mass with respect to 100 parts by mass of the component A This can improve the thermal conductivity.

The thermally conductive filler used in the present invention includes the following fillers with different average particle sizes, and each of the fillers is subjected to a particular surface treatment.

(1) B-1 is a thermally conductive filler that has an average particle size of 0.1 $\mu$m or more and less than 1.0 $\mu$m andis surface treated with a surface treatment agent containing a reactive group having no unsaturated bond.
(2) B-2 is a thermally conductive filler that has an average particle size of 1.0 $\mu$m or more and less than 10 $\mu$m and is surface treated with a surface treatment agent containing a reactive group having an unsaturated bond.
(3) B-3 is a thermally conductive filler that has an average particle size of 10 $\mu$m or more and 100 $\mu$m or less and is surface treated with at least one selected from the surface treatment agent containing a reactive group having no unsaturated bond and the surface treatment agent containing a reactive group having an unsaturated bond.

The reason for using the fillers with at least three different average particle sizes is that a base material is highly loaded with the fillers. The higher the filler loading, the higher the thermal conductivity. The average particle size is D50 (median diameter) in a volume-based cumulative particle size distribution measured by a laser diffraction scattering method. The method may use, e.g., a laser diffraction/scatteringparticle size distribution analyzer LA-950 S2 manufactured by HORIBA, Ltd.

The mixing ratio of B-1, B-2, and B-3 of the thermally conductive filler is preferably determined by (total surface area of B-3 + total surface area of B-2) = k $\times$ (total cross section of B-1), where k is 1 to 5.

A balanced combination of the fillers with three different particle sizes B-1, B-2, and B-3 is required to achieve high loading of the fillers in the base material. When the particle size and the loading amount of each of the fillers are controlled so that the value k obtained from the above formula is within the range of 1 to 5, the fillers can be combined with a minimum space left between the particles. This arrangement can provide nearly closest packing and result in a high thermal conductivity.

The mixing ratio of B-1, B-2, and B-3 is preferably such that 150 to 450 parts by mass of B-1, 250 to 550 parts by mass of B-2, and 400 to 1500 parts by mass of B-3 are blended with respect to 100 parts by mass of the component A

The filler B-1 has a small particle size andis surface treated with a surface treatment agent containing a reactive group having no unsaturated bond. The surface treatment agent preferably contains, e.g., an alkoxysilane compound represented by the following general formula (2).

$$R^2{}_bR^3{}_cSi(OR^4)_{4-b-c} \qquad (2)$$

(where R$^2$ independently represents an alkyl group having 6 to 15 carbon atoms, R$^3$ independently represents a substituted or unsubstituted alkyl group having 1 to 12 carbon atoms, R$^4$ independently represents an alkyl group having 1 to 6 carbon atoms, b represents an integer of 1 to 3, c represents an integer of 0 to 2, and b + c is an integer of 1 to 3)

In the formula (2), examples of the alkyl group represented by R$^2$ include hexyl, octyl, nonyl, decyl, dodecyl, and tetradecyl groups. When the carbon number of the alkyl group represented by R$^2$ is in the range of 6 to 15, the thermally conductive filler has sufficiently high wettability and better handleability, so that the low-temperature properties of the thermally conductive silicone composition can be improved. Examples of substituted or unsubstituted monovalent hydrocarbon groups represented by R$^3$ include the following: alkyl groups such as methyl, ethyl, propyl, isopropyl, butyl, isobutyl, tert-butyl, pentyl, neopentyl, hexyl, heptyl, octyl, nonyl, decyl, and dodecyl groups; cycloalkyl groups such as cyclopentyl, cyclohexyl, and cycloheptyl groups; aryl groups such as phenyl, tolyl, xylyl, naphthyl, and biphenyl groups; aralkyl groups such as benzyl, phenylethyl, phenylpropyl, and methylbenzyl groups; and substituted forms of these groups in which some or all carbon-bonded hydrogen atoms are substituted by halogen atoms (fluorine, chlorine, bromine, etc.) or cyano groups, including chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl groups. The carbon number of the monovalent hydrocarbon groups is typically 1 to 10, and more typically 1 to 6. Preferred examples of the monovalent hydrocarbon groups include substituted or unsubstituted alkyl groups having 1 to 3 carbon atoms such as methyl, ethyl, propyl, chloromethyl, bromoethyl, 3,3,3-trifluoropropyl, and cyanoethyl groups, and substituted or unsubstituted phenyl groups such as phenyl, chlorophenyl, and fluorophenyl groups. Examples of the alkyl group represented by $R^4$ include methyl, ethyl, propyl, isopropyl, butyl, isobutyl, tert-butyl, pentyl, neopentyl, andhexyl groups. In particular, the methyl group and the ethyl group are preferred. The alkoxysilane compound is also referred to as a silane coupling agent. The silane coupling agent may be used alone or in combinations of two or more.

The filler B-2 has a medium particle size andis surface treated with a surface treatment agent containing a reactive group having an unsaturated bond The surface treatment agent preferably contains an alkoxysilane compound, as in the case of B-1.

$$R^5{}_b, R^3{}_c Si(OR^4)_{4-b-c} \qquad (3)$$

In the formula (3), $R^5$ represents a reactive group having an unsaturated bond and may be, e.g., an alkenyl group, an acrylic group, a methacryloxy group, a vinyl group, or a styrene group.

The surface treatment agent has the unsaturated bond (carbon-carbon double bond). This unsaturated bond (carbon-carbon double bond) is cleaved and undergoes a crosslinking reaction with the component A when the thermally conductive silicone composition is heated and cured Consequently, the strength of the thermally conductive silicone sheet is increased

If the above reaction is also applied to the filler B-1 with a small particle size, the strength may further be increased, but the degree of plasticity of the thermally conductive silicone composition before heat curing will be extremely high, making it difficult to process the thermally conductive silicone composition. Thus, whether the surface treatment agent contains a reactive group having an unsaturated bond or not preferably depends on the particle size of the corresponding filler.

The filler B-3 has a large particle size andis surface treated with at least one selected from the surface treatment agent containing a reactive group having no unsaturated bond and the surface treatment agent containing a reactive group having an unsaturated bond.

The degree of plasticity of the thermally conductive silicone composition before curing is preferably 1 to 50. The degree of plasticity is measured in accordance with JIS K 6300-3, ISO 2007:1991. Using a Wallace plastometer, a sample is compressed between two metal plates under a predetermined load (100 N) for a predetermined time (15 sec) at a measurement temperature of 25°C. The degree of plasticity ($P_0 = t/t_0 \times 100$) is obtained by dividing the thickness (t) of the sample after the compression by the thickness (to) of the sample before the compression. The smaller the value $P_0$, the more flexible the sample.

The curing catalyst is preferably an organic peroxide. The organic peroxide catalyzes the curding process via a free radical reaction. Examples of the organic peroxide include benzoyl peroxide, di(p-methylbenzoyl) peroxide, di(o-methyl]benzoy]) peroxide, dicumyl peroxide, 2,5-dimethyl-2,5-bis(tert-butylperoxy)hexane, di-tert-butyl peroxide, and tert-butylperoxy benzoate. The organic peroxide is contained in an amount required for the curing of the composition of the present invention. Specifically, the content of the organic peroxide is preferably 0.5 to 30 parts by mass, and more preferably 1 to 20 parts by mass with respect to 100 parts by mass of the component A If the content of organic peroxide is less than the lower limit of the above range, the curing of the composition becomes insufficient, which may impair the sheet strength and accelerate oil bleeding. If the content of the organic peroxide is more than the upper limit of the above range, the resulting sheet may be brittle and cause foaming.

The thermally conductive silicone composition is molded into a sheet and the sheet is thermally cured, thereby forming a thermally conductive silicone sheet with a tensile strength of 5 MPa or more and a thermal conductivity of 1 W/m K or more. The tensile strength is preferably 5 to 12 MPa, and more preferably 6 to 10 MPa The thermal conductivity is preferably 1 to 8 W/m·K, and more preferably 2 to 5 W/m·K.

The thermally conductive silicone sheet may be combined with a reinforcement sheet such as glass cloth. In order to improve the thermal conductive properties, however, the thermally conductive silicone sheet should not include a reinforcement sheet. The thermally conductive silicone sheet of the present invention can not only have a strength that allows it to be handled satisfactorily without the use of a reinforcement sheet such as glass cloth, but also achieve flexibility, thermal conductive properties, mass productivity, and low cost.

The production method of the present invention includes uniformly mixing the composition containing the components A to C, molding the composition into a sheet, and thermally curing the sheet, so that a thermally conductive silicone sheet can be obtained In the sheet molding process, the composition is preferably sandwiched between polyester films and then rolled The thickness of the sheet is preferably 0.05 to 2 mm. In the thermal curing process, the sheet-like composition is preferably heat treated at 120 to 180°C for 5 to 30 minutes.

The composition of the present invention may contain components other than the above as needed. For example, a heat resistance improver (such as coloothar, titanium oxide, or cerium oxide), a flame retardant auxiliary, and a curing retarder may be added. The curing retarder may be, e.g., ethynylcyclohexanol. Moreover, an organic pigment or an inorganic particle pigment may be added for the purpose of coloring and toning.

Examples

Hereinafter, the present invention will be described by way of examples. However, the present invention is not limited to the following examples. Various parameters were measured in the following manner.

<Degree cf plisticity>

The degree of plasticity was measured in accordance with JIS K 6300-3, ISO 2007:1991. Using a Wallace plastometer, a sample was compressed between two metal plates under a predetermined load (100 N) for a predetermined time (15 sec) at a measurement temperature of 25°C. The degree of plasticity ($P_0 = t/t_0 \times 100$) was obtained by dividing the thickness (t) of the sample after the compression by the thickness (to) of the sample before the compression. The smaller the value $P_0$, the more flexible the sample.

<Tensile strength>

The tensile strength was measured in the following manner. First, the cured sheets of the compositions of Examples and Comparative Examples were cut into No. 3 dumbbell specimens in accordance with JIS K 6251. Then, each of the specimens was stretched until fracture occurred and the tensile strength of the cured sheet was measured using Autograph AGS-X manufactured by SHIMADZU CORPORATION.

<Thermal conductivity>

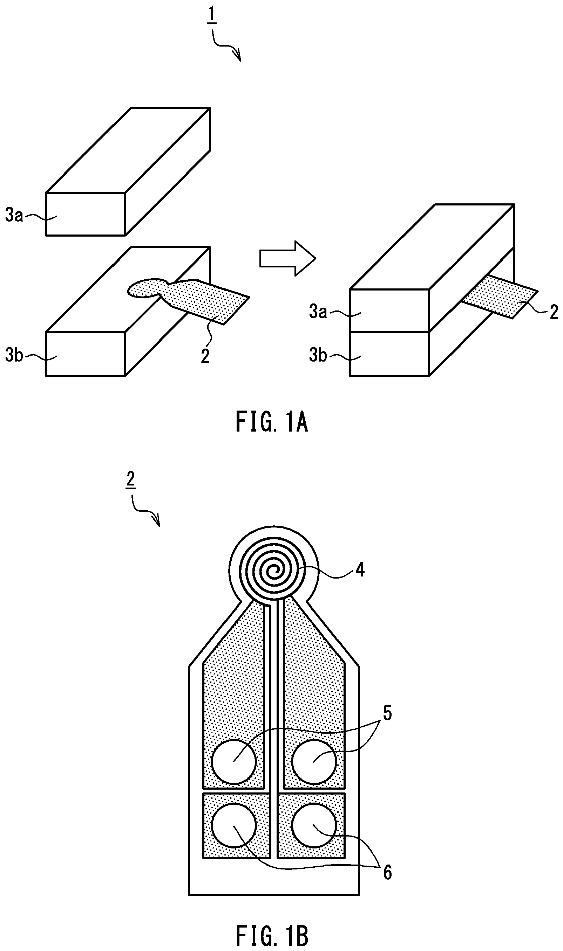

The thermal conductivity was measured by a hot disk (in accordance with ISO/CD 22007-2). As shown in FIG. 1A, using a thermal conductivity measuring apparatus 1, a polyimide film sensor 2 was sandwiched between two samples 3a, 3b, and constant power was applied to the sensor 2 to generate a certain amount of heat. Then, the thermal characteristics were analyzed from the value of a temperature rise of the sensor 2. The sensor 2 has a tip 4 with a diameter of 7 mm. As shown in FIG. 1B, the tip 4 has a double spiral structure of electrodes. Moreover, an electrode 5 for an applied current and an electrode 6 for a resistance value (temperature measurement electrode) are located on the lower portion of the sensor 2. The thermal conductivity was calculated by the following formula (1).

[Formula 1]

$$\lambda = \frac{P_0 \cdot D(\tau)}{\pi^{3/2} \cdot r} \cdot \frac{D(\tau)}{\Delta T(\tau)}$$

$\lambda$:        Thermal conductivity (W/m·K)
$P_0$:        Constant power (W)
r:        Radius of sensor (m)
$\tau$:        $\sqrt{\alpha \cdot t / r^2}$
$\alpha$:        Thermal diffusivity of sample ($m^2$/s)
t:        Measuring time (s)
$D(\tau)$:        Dimensionless function of $\tau$
$\Delta T(\tau)$:        Temperature rise of sensor (K)

<Method for calculating value k of thermally conductive filler>

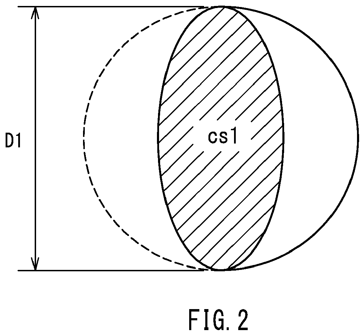

FIG. 2 is a schematic diagram illustrating a spherical particle of a thermally conductive filler. In FIG. 2, D 1 represents a diameter of a particle and cs 1 represents a cross section of the particle. The thermally conductive filler of

7

the present invention can be expressed by (total surface area of B-3 + total surface area of B-2) = k $\times$ (total cross section of B-1), which can be expanded as follows:

$$k = (\text{total surface area of B-3} + \text{total surface area of B-2}) / (\text{total cross section of B-1})$$

$$k = (\textstyle\sum sa2 + \sum sa3)/\sum cs1$$

$$\textstyle\sum cs1 = cs1 \times q1$$

$$* cs1 = (D1/2)2 \times \pi,\ q1 = M1/(4/3 \times \pi \times (D1/2)3 \times d1)$$

$$\textstyle\sum sa2 = sa2 \times M2$$

$$\textstyle\sum sa3 = sa3 \times M3$$

where $\sum cs1$ is the sum of the cross sections of particles of B-1 ($m^2$),
cs 1 is the cross section of a particle of B-1 ($m^2$),
q1 is the average particle number of B-1 (particle),
D1 is the average particle size of B-1 (m),
M1 is part by weight of B-1 (phr),
d1 is the density of B-1 ($g/m^3$),
$\sum sa2$ is the sum of the surface areas of particles of B-2 ($m^2$),
sa2 is the surface area of a particle of B-2 ($m^2/g$),
M2 is part by weight of B-2 (phr),
$\sum sa3$ is the sum of the surface areas of particles of B-3 ($m^2$),
sa3 is the surface area of a particle of B-3 ($m^2/g$), and
M3 is part by weight of B-3 (phr).

Tables 1 shows the calculated values in Examples 1 to 6 and Comparative Examples 1 to 3.

[TABLE 1]

|  | B-1 | B-2 | B-3 |
|---|---|---|---|
| Part by weigh: M (phr) | 300 | 400 | 800 |
| Specific surface area: sa ($m^2/g$) | - | 1.8 | 1 |
| Density: d ($g/m^3$) | $3.9 \times 10^6$ | - | - |
| Average particle size: D (m) | $2.7 \times 10^{-7}$ | - | - |
| Cross section: cs ($m^2$) | $5.4 \times 10^{-14}$ | - | - |
| Particle number: q (particle) | $7.5 \times 10^{15}$ | - | - |
| Sum of cross sections: $\sum cs$ ($m^2$) | 427 | - | - |
| Sum of surface areas: $\sum sa$ ($m^2$) | - | 720 | 800 |
| K: $\sum sa/\sum cs$ | 3.6 | | |

Tables 2 shows the calculated values in Examples 7 to 8 and Comparative Example 4.

[TABLE 2]

| | B-1 | B-2 | B-3 |
|---|---|---|---|
| Part by weigh: M (phr) | 300 | 400 | 800 |
| Specific surface area: sa (m$^2$/g) | - | 1.1 | 0.2 |
| Density: d (g/m$^3$) | $3.9 \times 10^6$ | - | - |
| Average particle size: D (m) | $5.0 \times 10^{-7}$ | - | - |
| Cross section: cs (m$^2$) | $2.0 \times 10^{-13}$ | - | - |
| Particle number: q (particle) | $1.2 \times 10^{15}$ | - | - |
| Sum of cross sections: $\sum$cs (m$^2$) | 231 | - | - |
| Sum of surface areas: $\sum$sa(m$^2$) | - | 440 | 160 |
| K: $\sum$sa/$\sum$cs | 2.6 | | |

(Examples 1 to 8 and Comparative Examples 1 to 4)

1. Material components

(1) Component A (matrix resin)

A-1: linear vinyl-terminated polydimethylsiloxane, molecular weight: 140000, degree of polymerization: 1891
A-2: linear vinyl-terminated polydimethylsiloxane, molecular weight: 72000, degree of polymerization: 972

(2) Component B (thermally conductive filler)

B-1-1: spherical alumina, average particle size: 0.27 $\mu$m, specific surface area: 6.7 m$^2$/g, density: $3.9 \times 10^6$ g/m$^3$
B-1-2: spherical alumina, average particle size: 0.5 $\mu$m, specific surface area: 4.1 m$^2$/g, density: $3.9 \times 10^6$ g/m$^3$
B-2-1: spherical alumina, average particle size: 2.1 $\mu$m, specific surface area: 1.8 m$^2$/g, density: $3.9 \times 10^6$ g/m$^3$
B-2-2: spherical alumina, average particle size: 1.6 $\mu$m, specific surface area: 1.1 m$^2$/g, density: $3.9 \times 10^6$ g/m$^3$
B-3-1: spherical alumina, average particle size: 18 $\mu$m, specific surface area: 1 m$^2$/g, density: $3.9 \times 10^6$ g/m$^3$
B-3-2: spherical alumina, average particle size: 20.3 $\mu$m, specific surface area: 0.2 m$^2$/g, density: $3.9 \times 10^6$ g/m$^3$

(3) Component C (curing catalyst (vulcanizing agent))
50% paste of 2,5-dimethyl-2,5-bis(tert-butylperoxy)hexane

2. Surface treatment of component B

The component B (thermally conductive filler) to be treated was placed in a vessel of a Henschel mixer. A surface treatment solution obtained by diluting any of the following silane coupling agents with a 77% ethanol aqueous solution was added dropwise to the vessel and stirred for 5 minutes. Then, the filler was taken out of the vessel, transferred to a metal container, and dried in a circulating hot air oven at 130°C for 2 hours. The weight of the silane coupling agent added to the component B (thermally conductive filler) was determined by the following formula.

$$\text{Amount of silane coupling agent (g)} = \text{weight of filler (g)} \times \text{specific surface area of filler (m}^2\text{/g)} \div \text{minimum coverage area of silane coupling agent (m}^2\text{/g)}$$

$$* \text{Minimum coverage area of silane coupling agent (m}^2\text{/g)} = 6.02 \times 10^{23} \times 13 \times 10^{-20} \div \text{molecular weight of silane coupling agent}$$

Surface treatment agent containing reactive group having no unsaturated bond: n-octyltrimethoxysilane (referred to as "octyl" in the following)

Surface treatment agent containing reactive group having no unsaturated bond: n-decyltrimethoxysilane (referred to as "decyl" in the following)

Surface treatment agent containing reactive group having unsaturated bond: 3-methacryloxypropyltrimethoxysilane (referred to as "methacryloxy" in the following)

Surface treatment agent containing reactive group having unsaturated bond: 7-octenyltr2methoxysilane (referred to as "octenyl" in the following)

3. Mixing process

The components for each example shown in Table 3 were placed in a pressure kneader in the proportions (parts by weight) as indicated, and kneaded for 15 minutes.

Then, the kneaded mixture was removed from the kneader and mixed with a defined amount of a curing catalyst (vulcanizing agent) by using an open roll. Thus, a composition of each example was obtained 4. Production of cured sheet

The composition of each example was sandwiched between two polyethylene terephthalate (PET) films and rolled with even-speed rolls in the form of a thin sheet. Subsequently, the sheet-like composition, together with the PET films, were cured between plates in a hot press at 170°C for 10 minutes. After the removal of the PET films on both sides, a cured sheet of the composition was produced.

Table 3 shows the results.

[TABLE 3]

| Classification | | Name of material | Name of surface treatment | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Fx. 4 |
|---|---|---|---|---|---|---|---|---|---|---|---|---|---|---|---|
| Matrix resin | | A-1 | - | 100 | 100 | 70 | 70 | 70 | 70 | 100 | 100 | 100 | 100 | 100 | 100 |
| Matrix resin | | A-2 | - | | | 30 | 30 | 30 | 30 | | | | | | |
| Filler | B-1 | B-1-1 | octyl | 300 | 300 | 300 | 300 | 300 | 300 | | | 300 | 300 | | |
| Filler | B-1 | B-1-1 | methacryloxy | | | | | | | | | | | 300 | |
| Filler | B-1 | B-1-2 | octyl | | | | | | | 300 | 300 | | | | 300 |
| Filler | B-2 | B-2-1 | decyl | | | | | | | | | 400 | 400 | 400 | |
| Filler | B-2 | B-2-1 | methacryloxy | 400 | 400 | 400 | 400 | | | | | | | | |
| Filler | B-2 | B-2-1 | octenyl | | | | | 400 | 400 | | | | | | |
| Filler | B-2 | B-2-2 | octyl | | | | | | | | | | | | 400 |
| Filler | B-2 | B-2-2 | octenyl | | | | | | | 400 | 400 | | | | |
| Filler | B-3 | B-3-1 | octyl | 800 | | | | | | | | 800 | | 800 | |
| Filler | B-3 | B-3-1 | methacryloxy | | 800 | 800 | | 800 | | | | | 800 | | |
| Filler | B-3 | B-3-1 | octenyl | | | | 800 | | 800 | | | | | | |
| Filler | B-3 | B-3-2 | octyl | | | | | | | | 800 | | | | 800 |
| Filler | B-3 | B-3-2 | methacryloxy | | | | | | | 800 | | | | | |
| Vulcanizing agent | | | - | 1.2 | 1.2 | 1.2 | 1.2 | 1.2 | 1.2 | 1.2 | 1.2 | 1.2 | 1.2 | 1.2 | 1.2 |
| k | | | | 3.6 | 3.6 | 3.6 | 3.6 | 3.6 | 3.6 | 2.6 | 2.6 | 3.6 | 3.6 | 3.6 | 2.6 |
| Degree of plasticity (mm×100) | | | | 35 | 33 | 30 | 21 | 16 | 15 | 29 | 26 | 16 | 21 | 80 | 21 |
| Tensile strength (MPa) | | | | 6.2 | 6.4 | 8.3 | 8.8 | 9.0 | 8.6 | 6.0 | 6.1 | 3.0 | 3.7 | 8.7 | 3.8 |
| Thermal conductivity (W/m·K) | | | | 4.6 | 4.6 | 4.6 | 4.6 | 4.6 | 4.6 | 4.8 | 4.7 | 4.6 | 4.6 | 4.6 | 4.7 |
| (Note) The value of each component in Examples and Comparative Examples indicates weight (g). | | | | | | | | | | | | | | | |

As can be seen from Table 3, the compositions were flexible and the cured sheets had a tensile strength of 5 MPa or more and a thermal conductivity of 1 W/m K or more in Examples. Moreover, the cured sheets had a high strength and were able to be handled satisfactorily without the use of a reinforcement sheet such as glass cloth.

On the other hand, in Comparative Examples 1 and 2, the tensile strength was lower than 5 MPa, since the surface treatment of the filler B-2 did not use the surface treatment agent that contained an alkenyl group. In Comparative Example 3, the degree of plasticity was more than 50, since the surface treatment of the filler B-1 did not use the surface treatment agent that did not contain an alkenyl group. Thus, there was a problem with flexibility. In Comparative Example 4, which was different from Comparative Examples 1 to 3 in the type of filler (ie., the value k), the tensile strength was lower than 5 MPa, since the surface treatment of the filler B-2 did not use the surface treatment agent that contained an alkenyl group.

Industrial Applicability

The thermally conductive silicone sheet of the present invention is suitable to be interposed between a heat generating member and a heat dissipating material of electrical and electronic components or the like, according to a further aspect.

Description of Reference Numerals

| 1 | Thermal conductivity measuring apparatus |
| 2 | Sensor |
| 3a, 3b | Sample |
| 4 | Tip of the sensor |
| 5 | Electrode for applied current |
| 6 | Electrode for resistance value (temperature measurement electrode) |

## Claims

1. A thermally conductive silicone composition comprising the following components A to C:

   A. a linear organopolysiloxane having a reactive group at each end of a molecular chain;
   B. a thermally conductive filler including the following B-1, B-2, and B-3 in an amount of 800 to 2500 parts by mass with respect to 100 parts by mass of the component A; and
   C. a curing catalyst in a catalytic amount,

   the component B including:

   B-1. a thermally conductive filler that has an average particle size of 0.1 $\mu$m or more and less than 1.0 $\mu$m and is surface treated with a surface treatment agent containing a reactive group having no unsaturated bond;
   B-2. a thermally conductive filler that has an average particle size of 1.0 $\mu$m or more and less than 10 $\mu$m and is surface treated with a surface treatment agent containing a reactive group having an unsaturated bond; and
   B-3: a thermally conductive filler that has an average particle size of 10 $\mu$m or more and 100 $\mu$m or less and is surface treated with at least one selected from the surface treatment agent containing a reactive group having no unsaturated bond and the surface treatment agent containing a reactive group having an unsaturated bond.

2. The thermally conductive silicone composition according to claim 1, wherein the surface treatment agent containing a reactive group having no unsaturated bond is a silane coupling agent that does not contain an alkenyl group.

3. The thermally conductive silicone composition according to claim 1, wherein the surface treatment agent containing a reactive group having no unsaturated bond is a silane coupling agent that contains an alkyl group.

4. The thermally conductive silicone composition according to any one of claims 1 to 3, wherein the surface treatment agent containing a reactive group having an unsaturated bond is at least one selected from the group consisting of a silane coupling agent containing an alkenyl group, a silane coupling agent containing an acrylic group, a silane coupling agent containing a methacryloxy group, a silane coupling agent containing a vinyl group, and a silane coupling agent containing a styrene group.

5. The thermally conductive silicone composition according to any one of claims 1 to 4, wherein a degree of plasticity determined in accordance with the method outlined in the description of the thermally conductive silicone composition before curing is 1 to 50.

6. The thermally conductive silicone composition according to any one of claims 1 to 5, wherein a linear terminal-reactive polysiloxane of the component A is represented by the following general formula (1):

$$X\text{-}[Si(CH_3)_2\text{-}O\text{-}]_n Si(CH_3)_2\text{-}Y \qquad (1),$$

where a degree of polymerization n is in the range of 5 to 2100 and end groups X, Y are vinyl groups.

7. The thermally conductive silicone composition according to any one of claims 1 to 6, wherein a mixing ratio of B-1, B-2, and B-3 is determined by (total surface area of B-3 + total surface area of B-2) = k $\times$ (total cross section of B-1), where k is 1 to 5.

8. The thermally conductive silicone composition according to any one of claims 1 to 7, wherein the curing catalyst is an organic peroxide.

9. The thermally conductive silicone composition according to any one of claims 1 to 8, wherein the thermally conductive filler of the component B contains at least one selected from the group consisting of aluminum oxide, zinc oxide, silicon oxide, silicon carbide, aluminum nitride, and boron nitride.

10. The thermally conductive silicone composition according to any one of claims 1 to 9, wherein the mixing ratio of B-1, B-2, and B-3 is such that 150 to 450 parts by mass of B-1, 250 to 550 parts by mass of B-2, and 400 to 1500 parts by mass of B-3 are blended with respect to 100 parts by mass of the component A.

11. A thermally conductive silicone sheet comprising the thermally conductive silicone composition according to any one of claims 1 to 10,

wherein the thermally conductive silicone composition is molded into a sheet and the sheet is thermally cured, and a tensile strength determined in accordance with the method outlined in the description of the thermally conductive silicone sheet is 5 MPa or more.

12. The thermally conductive silicone sheet according to claim 11, wherein a thermal conductivity determined in accordance with the method outlined in the description of the thermally conductive silicone sheet is 1 W/m·K or more.

13. The thermally conductive silicone sheet according to claim 11 or 12, wherein the thermally conductive silicone sheet does not include a reinforcement sheet.

14. A method for producing a thermally conductive silicone sheet, comprising:

uniformly mixing the composition containing the components A to C according to any one of claims 1 to 10;
molding the composition into a sheet; and
thermally curing the sheet.

15. Use of the thermally conductive silicone sheet according to one of claims 11 to 13, or as manufactured according to claim 14, for interposing it between a heat generating member and a heat dissipating material of an electric or electronic component.

**Patentansprüche**

1. Wärmeleitfähige Silikonzusammensetzung mit den folgenden Komponenten A bis C:

A. ein lineares Organopolysiloxan mit einer reaktiven Gruppe an jedem Ende einer Molekülkette;
B. ein wärmeleitfähiger Füllstoff einschließlich der folgenden B-1, B-2 und B-3 in einer Menge von 800 bis 2500 Massenteilen in Bezug auf 100 Massenteile der Komponente A; und

C. einen Härtungskatalysator in einer katalytischen Menge,

wobei die Komponente B beinhaltet:

B-1. ein wärmeleitfähiger Füllstoff mit einer durchschnittlichen Partikelgröße von 0,1 $\mu$m oder mehr und weniger als 1,0 $\mu$m und der mit einem eine reaktive Gruppe ohne ungesättigte Bindungen aufweisenden Oberflächenbehandlungs-Agens oberflächenbehandelt ist;

B-2. ein wärmeleitfähiger Füllstoff mit einer durchschnittlichen Partikelgröße von 1,0 $\mu$m oder mehr und weniger als 10 $\mu$m und der mit einem eine reaktive Gruppe mit einer ungesättigten Bindung aufweisenden Oberflächenbehandlungs-Agens oberflächenbehandelt ist; und

B-3: ein wärmeleitfähiger Füllstoff mit einer durchschnittlichen Partikelgröße von 10 $\mu$m oder mehr und 100 $\mu$m oder weniger und der mit dem eine reaktive Gruppe ohne ungesättigte Bindungen aufweisenden Oberflächenbehandlungs-Agens oder dem eine reaktive Gruppe mit einer ungesättigten Bindung aufweisenden Oberflächenbehandlungs-Agens oberflächenbehandelt ist.

2. Wärmeleitfähige Silikonzusammensetzung gemäß Anspruch 1, wobei das eine reaktive Gruppe ohne ungesättigte Bindungen aufweisende Oberflächenbehandlungs-Agens ein Silan-Kopplungsagens ist, das keine Alkenylgruppe aufweist.

3. Wärmeleitfähige Silikonzusammensetzung gemäß Anspruch 1, wobei das eine reaktive Gruppe ohne ungesättigte Bindungen aufweisende Oberflächenbehandlungs-Agens ein Silan-Kopplungsagens ist, das eine Alkylgruppe aufweist.

4. Wärmeleitfähige Silikonzusammensetzung gemäß einem der Ansprüche 1 bis 3, wobei das eine reaktive Gruppe mit einer ungesättigten Bindung enthaltende Oberflächenbehandlungs-Agens wenigstens eines ist ausgewählt aus der Gruppe, die aus einem Silan-Kopplungsagens mit einer Alkenylgruppe, einem Silan-Kopplungsagens mit einer Acrylgruppe, einem Silan-Kopplungsagens mit einer Methacryloxygruppe, einem Silan-Kopplungsagens mit einer Vinylgruppe und einem Silan-Kopplungsagens mit einer Styrengruppe besteht.

5. Wärmeleitfähige Silikonzusammensetzung gemäß einem der Ansprüche 1 bis 4, wobei ein gemäß dem in der Beschreibung dargestellten Verfahren bestimmter Plastizitätsgrad der wärmeleitfähigen Silikonzusammensetzung vor dem Aushärten 1 bis 50 beträgt.

6. Wärmeleitfähige Silikonzusammensetzung gemäß einem der Ansprüche 1 bis 5, wobei ein lineares endständig-reaktives Polysiloxan der Komponente A durch die folgende allgemeine Formel (1) dargestellt ist:

$$X\text{-}[Si(CH_3)_2\text{-}O\text{-}]_nSi(CH_3)_2\text{-}Y \qquad (1),$$

worin ein Polymerisationsgrad n im Bereich von 5 bis 2100 ist und die Gruppen X, Y Vinylgruppen sind.

7. Wärmeleitfähige Silikonzusammensetzung gemäß einem der Ansprüche 1 bis 6, wobei ein Mischungsverhältnis von B-1, B-2 und B-3 bestimmt ist durch (Gesamtoberfläche von B-3 + Gesamtoberfläche von B-2) = k $\times$ (Gesamtquerschnitt von B-1), worin k 1 bis 5 beträgt.

8. Wärmeleitfähige Silikonzusammensetzung gemäß einem der Ansprüche 1 bis 7, wobei der Härtungskatalysator ein organisches Peroxid ist.

9. Wärmeleitfähige Silikonzusammensetzung gemäß einem der Ansprüche 1 bis 8, wobei der wärmeleitfähige Füllstoff der Komponente B wenigstens eines enthält ausgewählt aus der Gruppe, die aus Aluminiumoxid, Zinkoxid, Siliciumoxid, Siliciumcarbid, Aluminiumnitrid und Bornitrid besteht.

10. Wärmeleitfähige Silikonzusammensetzung gemäß einem der Ansprüche 1 bis 9, wobei das Mischungsverhältnis von B-1, B-2 und B-3 derart ist, dass 150 bis 450 Massenteile von B-1, 250 bis 550 Massenteile von B-2 und 400 bis 1500 Massenteile von B-3 in Bezug auf 100 Massenteile der Komponente A vermischt sind.

11. Wärmeleitfähige Silikonfolie, enthaltend die wärmeleitfähige Silikonzusammensetzung gemäß einem der Ansprüche 1 bis 10,

wobei die wärmeleitfähige Silikonzusammensetzung zu einer Folie geformt wird und die Folie thermisch ausgehärtet wird, und

eine gemäß dem in der Beschreibung dargelegten Verfahren bestimmte Zugfestigkeit der wärmeleitfähigen Silikonfolie 5 MPa oder mehr beträgt.

**12.** Wärmeleitfähige Silikonfolie gemäß Anspruch 11, wobei eine gemäß dem in der Beschreibung dargelegten Verfahren bestimmte Wärmeleitfähigkeit der wärmeleitfähigen Silikonfolie 1 W/m·K oder mehr beträgt.

**13.** Wärmeleitfähige Silikonfolie gemäß Anspruch 11 oder 12, wobei die wärmeleitfähige Silikonfolie keine Verstärkungsfolie aufweist.

**14.** Verfahren zum Herstellen einer wärmeleitfähigen Silikonfolie, beinhaltend:

gleichförmiges Mischen der die Komponenten A bis C gemäß einem der Ansprüche 1 bis 10 enthaltenden Zusammensetzung;
Formen der Zusammensetzung zu einer Folie; und
thermisches Aushärten der Folie.

**15.** Verwendung der wärmeleitfähigen Silikonfolie gemäß einem der Ansprüche 11 bis 13, oder der gemäß Anspruch 14 hergestellten Silikonfolie, zum Einfügen zwischen einem Wärme-erzeugenden Bauteil und einem Wärme-abführenden Material einer elektrischen oder elektronischen Komponente.

**Revendications**

**1.** Composition de silicone thermoconductrice comprenant les composants A à C suivants :

A. un organopolysiloxane linéaire ayant un groupe réactif au niveau de chaque extrémité d'une chaîne moléculaire ;
B. une charge thermoconductrice comportant les B-1, B-2 et B-3 suivants en une quantité de 800 à 2500 parties en masse par rapport à 100 parties en masse du composant A ; et
C. un catalyseur de durcissement en une quantité catalytique,

le composant B comportant :

B-1. une charge thermoconductrice qui a une taille moyenne de particules de 0,1 $\mu$m ou plus et inférieure à 1,0 $\mu$m et est traitée en surface avec un agent de traitement de surface contenant un groupe réactif n'ayant aucune liaison insaturée ;
B-2. une charge thermoconductrice qui a une taille moyenne de particules de 1,0 $\mu$m ou plus et inférieure à 10 $\mu$m et est traitée en surface avec un agent de traitement de surface contenant un groupe réactif ayant une liaison insaturée ; et
B-3 : une charge thermoconductrice qui a une taille moyenne de particules de 10 $\mu$m ou plus et 100 $\mu$m ou moins et est traitée en surface avec au moins l'un choisi parmi l'agent de traitement de surface contenant un groupe réactif n'ayant aucune liaison insaturée et l'agent de traitement de surface contenant un groupe réactif ayant une liaison insaturée.

**2.** Composition de silicone thermoconductrice selon la revendication 1, dans laquelle l'agent de traitement de surface contenant un groupe réactif n'ayant aucune liaison insaturée est un agent de couplage silane qui ne contient pas de groupe alcényle.

**3.** Composition de silicone thermoconductrice selon la revendication 1, dans laquelle l'agent de traitement de surface contenant un groupe réactif n'ayant aucune liaison insaturée est un agent de couplage silane qui contient un groupe alkyle.

**4.** Composition de silicone thermoconductrice selon l'une quelconque des revendications 1 à 3, dans laquelle l'agent de traitement de surface contenant un groupe réactif ayant une liaison insaturée est au moins l'un choisi parmi le groupe constitué par un agent de couplage silane contenant un groupe alcényle, un agent de couplage silane contenant un groupe acrylique, un agent de couplage silane contenant un groupe méthacryloxy, un agent de couplage silane contenant un groupe vinyle, et un agent de couplage silane contenant un groupe styrène.

**5.** Composition de silicone thermoconductrice selon l'une quelconque des revendications 1 à 4, dans laquelle un degré de plasticité déterminé conformément au procédé énoncé dans la description de la composition de silicone thermoconductrice avant durcissement va de 1 à 50.

**6.** Composition de silicone thermoconductrice selon l'une quelconque des revendications 1 à 5, dans laquelle un polysiloxane linéaire à terminaison réactive du composant A est représenté par la formule générale (1) suivante :

$$X\text{-}[Si(CH3)2\text{-}O\text{-}]nSi(CH3)2\text{-}Y \qquad (1),$$

où un degré de polymérisation n est dans la plage de 5 à 2100 et les groupes terminaux X, Y sont des groupes vinyle.

**7.** Composition de silicone thermoconductrice selon l'une quelconque des revendications 1 à 6, dans laquelle un rapport de mélange de B-1, B-2 et B-3 est déterminé par (aire totale de B-3 + aire totale de B-2) = k × (section transversale totale de B-1), où k va de 1 à 5.

**8.** Composition de silicone thermoconductrice selon l'une quelconque des revendications 1 à 7, dans laquelle le catalyseur de durcissement est un peroxyde organique.

**9.** Composition de silicone thermoconductrice selon l'une quelconque des revendications 1 à 8, dans laquelle la charge thermoconductrice du composant B contient au moins l'un choisi dans le groupe constitué par oxyde d'aluminium, oxyde de zinc, oxyde de silicium, carbure de silicium, nitrure d'aluminium et nitrure de bore.

**10.** Composition de silicone thermoconductrice selon l'une quelconque des revendications 1 à 9, dans laquelle le rapport de mélange de B-1, B-2 et B-3 est tel que 150 à 450 parties en masse de B-1, 250 à 550 parties en masse de B-2 et 400 à 1500 parties en masse de B-3 sont mélangées par rapport à 100 parties en masse du composant A.

**11.** Feuille de silicone thermoconductrice comprenant la composition de silicone thermoconductrice selon l'une quelconque des revendications 1 à 10, dans laquelle la composition de silicone thermoconductrice est moulée en une feuille et la feuille est thermiquement durcie, et une résistance à la traction déterminée conformément au procédé énoncé dans la description de la feuille de silicone thermoconductrice est de 5 MPa ou plus.

**12.** Feuille de silicone thermoconductrice selon la revendication 11, dans laquelle une conductivité thermique déterminée conformément au procédé énoncé dans la description de la feuille de silicone thermoconductrice est de 1 W/m□K ou plus.

**13.** Feuille de silicone thermoconductrice selon la revendication 11 ou 12, dans laquelle la feuille de silicone thermoconductrice ne comporte pas de feuille de renforcement.

**14.** Procédé permettant de produire une feuille de silicone thermoconductrice, comprenant : le mélange uniforme de la composition contenant les composants

A à C selon l'une quelconque des revendications 1 à 10 ;
le moulage de la composition en une feuille ; et
le durcissement thermique de la feuille.

**15.** Utilisation de la feuille de silicone thermoconductrice selon l'une des revendications 11 à 13, ou telle que fabriquée selon la revendication 14, pour l'intercaler entre un élément générant de la chaleur et un matériau de dissipation thermique d'un composant électrique ou électronique.

FIG. 1A

FIG. 1B

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020133374 A
- WO 2018061447 A1
- WO 2018020862 A1
- JP 2017222884 A